# FASCICULE DE BREVET EUROPEEN

(11) **EP 2 325 070 B1**
(45) Date de publication et mention de la délivrance du brevet: **02.01.2013**
(21) Numéro de dépôt: 10306270.9
(22) Date de dépôt: 18.11.2010
(51) Int. Cl.: B60R 19/02

(54) **Ensemble avant de véhicule automobile comprenant un bouclier pare-chocs avant pourvu d'une poutre permettant la fixation d'au moins un équipement auxiliaire du véhicule automobile**
Frontendmodul eines Kraftfahrzeugs, das einen verformbaren vorderen Stoßfänger umfasst, der mit einem Träger zur Befestigung einer Hilfsausrüstung des Kraftfahrzeugs ausgestattet ist
Front unit of an automobile comprising a front bumper shield provided with a beam enabling the attachment of at least one auxiliary device of the automobile

(30) Priorité: 18.11.2009 FR 0958139
(43) Date de publication de la demande: 25.05.2011
(73) Titulaire: Faurecia Bloc Avant, 92000 Nanterre (FR)
(72) Inventeur: Gonin, Vincent, 37540, Saint Cyr sur Loire (FR); Dufee, Julien, 90340, Novillard (FR)
(74) Mandataire: Domenego, Bertrand

(56) Documents cités:
- EP-A1- 1 698 520
- FR-A1- 2 911 559
- FR-A1- 2 919 568

## Description

La présente invention concerne un ensemble avant de véhicule automobile, de type comprenant au moins deux paires de longerons avant d'un châssis d'un véhicule automobile et des platines d'appui et de fixation disposées aux extrémités avant des longerons, les platines étant reliées entre elles par une traverse métallique s'étendant en regard des longerons supérieurs. Le document FR 2 919 568 décrit un tel ensemble avant.

Les véhicules automobiles modernes sont conçus pour répondre de façon convenable à différents types de chocs frontaux possibles, tel que les chocs à petite vitesse ou « chocs parking », pour une vitesse comprise entre 2,5 et 4 km/h (ECE42), les chocs à moyenne vitesse ou « chocs réparabilité », pour une vitesse d'environ 16 km/h (Danner) et les chocs à grandes vitesse, pour une vitesse comprise entre 56 et 65 km/h.

Les véhicules automobiles modernes sont également conçus pour protéger les piétons en cas de choc piéton, et en particulier pour protéger les jambes et la hanche du piéton.

Il est possible de prévoir un ensemble avant comprenant une poutre pare-chocs supérieure métallique fixée aux extrémités de longerons supérieurs avant d'une voie haute (brancards principaux) par l'intermédiaire de premiers absorbeurs de chocs métalliques rapportés sur la poutre pare-chocs supérieure, et une poutre pare-chocs inférieure fixée aux extrémités de longerons inférieurs avant d'une voie basse (prolonges de berceau) par l'intermédiaire de second absorbeurs de chocs métalliques ou en matière plastique, rapportés sur la poutre pare-chocs inférieure.

Néanmoins, un tel ensemble avant est compliqué et coûteux à fabriquer et à installer.

En outre, un tel ensemble ne s'intègre pas de façon optimale avec le reste des équipements de la partie avant du véhicule automobile, c'est-à-dire que ces équipements, tels que le système de refroidissement, les optiques ou autres sont disposés autour de l'ensemble avant sans liaison particulière entre cet ensemble et ces équipements. Des moyens de fixation complexes doivent alors être ajoutés pour liés ces différents éléments entre eux.

Un but de l'invention est de proposer un ensemble avant permettant de répondre de manière convenable aux chocs piétons et aux chocs à petite et moyenne vitesse et permettant une intégration facile des autres équipements de l'avant du véhicule, tout en étant simple et en présentant un coût de fabrication faible.

A cet effet, l'invention concerne un ensemble avant du type précité comprenant un bouclier pare-chocs avant comprenant un cadre monobloc en matière plastique formé d'une poutre supérieure et d'une poutre pare-chocs inférieure et de deux montants reliant les poutres pare-chocs supérieure et inférieure, les montants du cadre étant configurés pour faire office d'absorbeurs de chocs et fixés en appui directement contre les platines, la poutre supérieure s'étendant au-dessus de la traverse métallique et des platines.

Selon d'autres modes de réalisation, l'ensemble avant comprend une ou plusieurs des caractéristiques suivantes, prise(s) isolément ou selon toutes les combinaisons techniquement possibles :
- la poutre supérieure comprend des moyens de fixation d'au moins un équipement auxiliaire du véhicule automobile ;
- la poutre supérieure comprend au moins deux branches s'étendant sensiblement perpendiculairement au cadre vers l'arrière de celui-ci, lesdites branches comprenant des moyens de fixation d'un équipement auxiliaire du véhicule automobile ;
- la poutre supérieure présente des nervures s'étendant au moins sur la face avant de ladite poutre ;
- la poutre supérieure présente en outre des nervures sur sa face supérieure, lesdites nervures s'étendant en outre sur les branches ;
- la poutre inférieure comprend des moyens de fixation d'au moins un équipement auxiliaire du véhicule automobile ;
- l'ensemble avant comprend un élément d'absorption d'énergie, ledit élément étant disposé contre la traverse métallique et s'étendant sensiblement en travers du cadre ;
- les montants présentent une structure alvéolaire formée d'alvéoles s'étendant longitudinalement au travers des montants et débouchant sur la face arrière et/ou avant du bouclier;
- chaque montant comprend des premières alvéoles borgnes, fermées du côté de la face arrière et ouvertes du côté de la face avant, et des deuxième alvéoles borgnes ouvertes du côté de la face arrière et fermée du côté de la face avant ;
- l'ensemble avant comprend en outre un équipement auxiliaire s'étendant en regard de la face arrière du bouclier, ledit équipement étant fixé au moins à la poutre supérieure dudit bouclier par les moyens de fixation de ladite poutre additionnelle ; et
- l'équipement auxiliaire est fixé à la poutre supérieure par au moins un élément de liaison fixé aux moyens de fixation de la poutre supérieure, ledit élément de liaison étant agencé pour absorber les vibrations entre l'équipement auxiliaire et le bouclier.

L'invention concerne également un bouclier pare-chocs avant pour véhicule automobile du type comprenant un cadre monobloc formé d'une poutre pare-chocs supérieure et d'une poutre pare-chocs inférieure et de deux montants reliant les poutres pare-chocs supérieure et inférieure, ladite poutre supérieure comprenant des moyens de fixation d'au moins un équipement auxiliaire du véhicule automobile, caractérisé en ce qu'il est prévu pour être intégré dans un ensemble avant de véhicule automobile, le bouclier étant prévu pour être intégré dans un ensemble avant de véhicule automobile tel que décrit ci-dessus, les montants du bouclier étant configurés pour faire office d'absorbeurs de chocs et adaptés pour être fixés en appui directement contre les platines.

L'invention et ses avantages seront mieux compris à la lecture de la description qui va suivre, donnée uniquement à titre d'exemple, et faite en référence aux dessins annexés, sur lesquels :
- la figure 1 est une vue schématique en perspective éclatée d'un ensemble avant selon l'invention ;
- la figure 2 est une vue schématique en perspective de l'ensemble avant de la figure 1 partiellement assemblé,
- la figure 3 est une vue schématique en perspective de l'ensemble avant de la figure 2 assemblé, et
- la figure 4 est une vue en perspective de trois-quarts arrière d'un ensemble avant des figures 1 et 2, un équipement auxiliaire étant fixé au bouclier dudit ensemble.

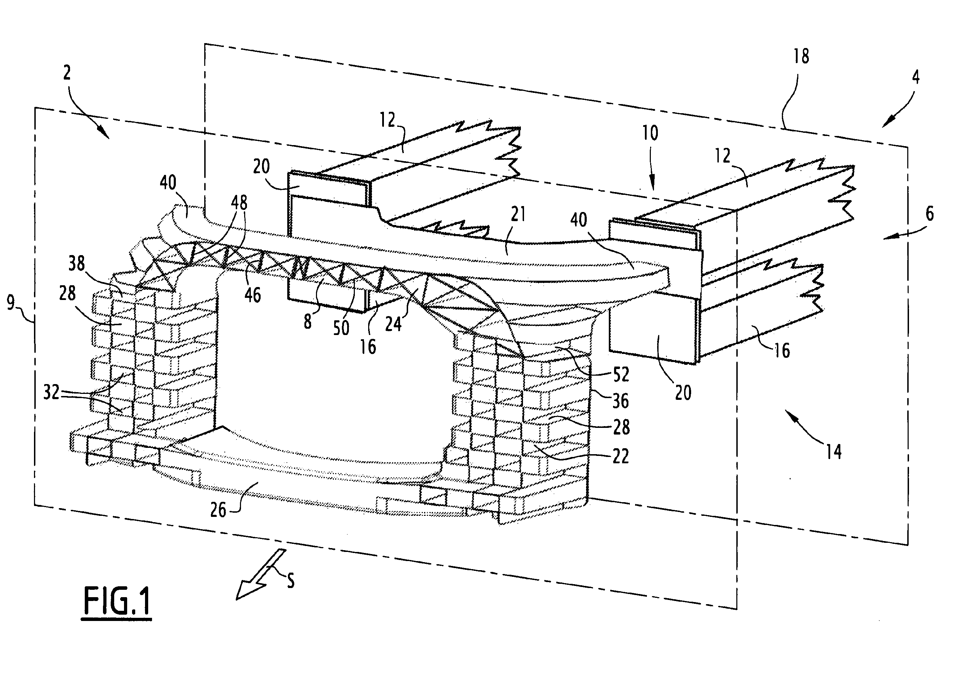

Par la suite, les termes d'orientation, tels que « longitudinal », « transversal », « avant », « arrière », « au-dessus », « en dessous », etc. s'entendent par référence à l'orientation usuelle des véhicules automobiles, illustrée sur la figure 1 par la flèches S dirigée horizontalement vers l'avant suivant une direction longitudinale du véhicule automobile.

Tel que représenté sur la figure 1, un véhicule automobile 2 comprend un châssis 4 comprenant une partie avant 6, un bouclier 8 pare-chocs avant disposé à l'extrémité avant de la partie avant 6 pour protéger la partie avant 6 en cas de choc, et une peau 9 de pare-chocs pour recouvrir le bouclier 8.

La partie avant 6 comprend une voie haute 10 comprenant une paire de longerons supérieurs 12, ou brancards, et une voie basse 14 comprenant une paire de longerons inférieurs 16, qui peuvent constituer des prolonges de berceau.

Les longerons supérieurs 12 s'étendent longitudinalement et sont espacés transversalement l'un de l'autre.

Les longerons inférieurs 16 s'étendent longitudinalement et sont espacés transversalement l'un de l'autre. L'écartement transversal entre les longerons inférieurs 16 est sensiblement égal à celui entre les longerons supérieurs 12.

Les longerons supérieurs 12 sont tarés pour encaisser une force axiale maximale sans flambement comprise entre 80kN et 100kN. Les longerons inférieurs 16 sont tarés pour encaisser une force axiale maximale sans flambement comprise entre 25kN et 45kN. Sur certains véhicules aux gabarits éloignés de la moyenne, les fourchettes de tarage proposées peuvent différer légèrement, sans sortir du cadre de l'invention.

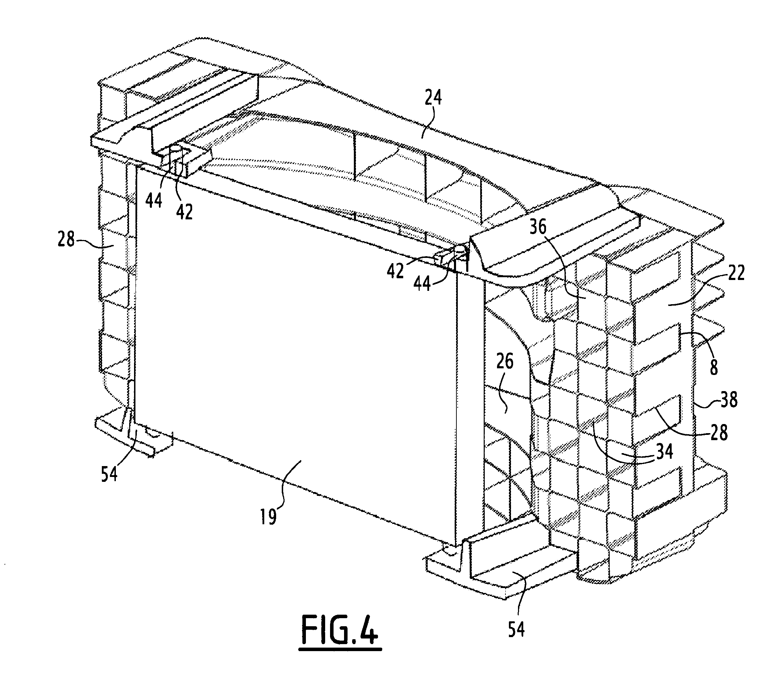

Les longerons supérieurs 12 sont prévus pour recevoir entre eux et supporter au moins en partie une face avant 18. La face avant 18 est représentée sur la figure 1 de façon schématique par un rectangle en traits mixte. De manière connue, la face avant 18 comprend un cadre de support portant des organes fonctionnels d'un système de refroidissement du groupe motopropulseur du véhicule et/ou d'un système de climatisation, tel qu'un ou plusieurs radiateur ou un groupe motoventilateur. Comme représenté sur la figure 4 et comme cela sera décrit ultérieurement, le système de refroidissement comprend un radiateur 19 fixé au bouclier 8.

La face avant 18 se situe en partie en retrait vers l'arrière des extrémités avant des longerons supérieur 12 et inférieurs 16.

La partie avant 6 comprend un paire de platines 20 de fixation disposées aux extrémités avant des longerons supérieurs 12 et inférieurs 16. Chaque platine 20 relie l'extrémité avant d'un longerons supérieur 12 à celle du longeron inférieur 16 adjacent situé du même côté. Chaque platine 20 présente la forme d'une plaque métallique s'étendant dans un plan transversal sensiblement vertical. Les platines 20 peuvent être réalisées en acier embouti, roulé, plié, ou encore en alliage léger.

Les platines 20 sont reliées entre elles par une traverse métallique 21 dont les extrémités sont fixées sensiblement en regard des longerons supérieurs 12, comme représenté sur la figure 1. Ainsi, la traverse métallique 21 est située à hauteur de la voie haute 10 et lie plus particulièrement les longerons supérieurs 12. La traverse métallique 21 présente par exemple une hauteur comprise de préférence entre 70 mm et 120 mm et a pour fonction de s'opposer à l'intrusion d'un poteau, d'un véhicule ou de toute structure rigide externe vers la face avant 18 en cas de choc contre le véhicule automobile. Entre les longerons 12 et donc entre les extrémités de la traverse, la traverse métallique 21 présente une forme galbée vers l'avant de sorte à s'étendre en travers du bouclier 8, comme cela sera décrit ultérieurement. Cette forme permet d'améliorer l'aéraulique en préservant le refroidissement au niveau du radiateur, en éloignant la poutre métallique du groupe de refroidissement. Cette géométrie permet de surcroit à la poutre de bénéficier d'une meilleure résistance en flexion lors d'un choc axial du véhicule, et donc de s'opposer efficacement à l'intrusion d'un obstacle rigide à l'intérieur du véhicule. La section de la poutre peut être constitué d'un profil ouvert (par exemple en forme de U ou de H) ou fermé, éventuellement cloisonné, propre à améliorer ses caractéristiques de rigidité. La traverse métallique 21 est fixée aux platines 20 par vissage ou par soudage par exemple.

La peau 9 est un élément de carrosserie avant du véhicule et définissant le galbe extérieur du véhicule.

Le bouclier 8 est disposé entre la peau 9, par laquelle il est recouvert, et la partie avant 6. Il a pour fonction, avec la traverse métallique 21, d'absorber l'énergie de chocs à petite vitesse (choc parking ECE42) et de chocs à moyenne vitesse (compatibilité RCAR, choc réparabilité Danner) de façon à préserver le châssis 4, ainsi que de protéger un piéton en cas de choc piéton.

Le bouclier 8 est fixé en appui longitudinal contre les platines 20. Le bouclier 8 est disposé devant la face avant 18 de façon à la protéger, ainsi que les organes fonctionnels qu'elle porte.

Le bouclier 8 comprend un cadre 22 monobloc formé d'une poutre pare-chocs supérieure 24 s'étendant au-dessus de la voie haute 10, d'une poutre pare-chocs inférieure 26 située à hauteur de la voie basse 16 et de deux montants 28 reliant les poutres pare-chocs 24, 26 entre elles.

Les poutres pare-chocs 24, 26 s'étendent sensiblement transversalement et horizontalement. Elles sont espacées verticalement l'une de l'autre. Les montants 28 s'étendent sensiblement verticalement entre les poutres pare-chocs 24, 26.

La poutre inférieure 26 pour fonction de canaliser l'énergie d'un choc vers les montants 28 en cas de collision. De la même manière, la traverse métallique 21 vise à canaliser l'énergie d'un choc vers les platines 20 et les brancards supérieurs 12 en cas de collision. La poutre pare-chocs inférieure 26, ou « poutre pare-chocs piéton », a également pour fonction de protéger la jambe en arrêtant le tibia en cas de choc piéton.

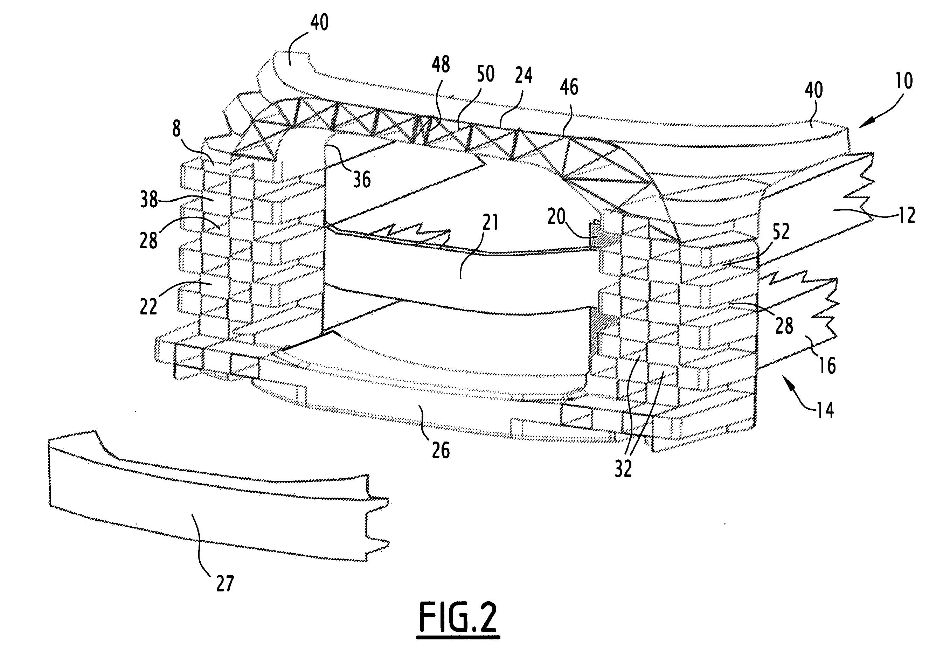

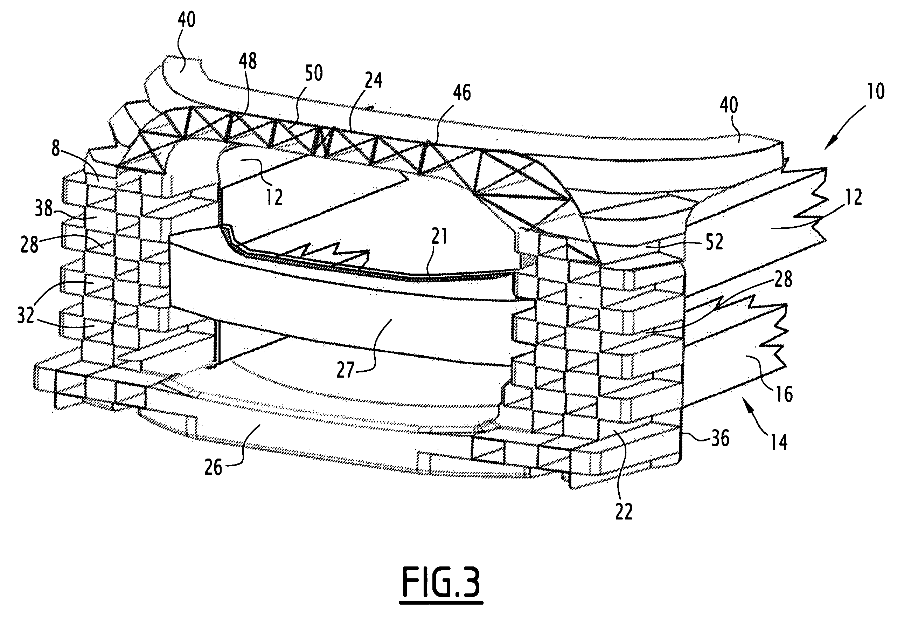

La poutre pare-chocs inférieure 26 est disposée pour venir impacter la jambe d'un piéton en dessous du genou, tandis que la traverse métallique 21 est prévue pour venir impacter la jambe d'un piéton sensiblement au droit du genou. A cet effet, la partie galbée de la poutre métallique 21 est recouverte par un élément d'absorption d'énergie 27, comme représenté sur les figures 2 et 3. Cet élément d'absorption 27 est souple et est par exemple réalisé en mousse expansée, comme représenté sur les figures 2 et 3.

En alternative, l'élément d'absorption 27 est réalisé en matériau plastique injecté et présente par exemple des nervures favorisant l'absorption d'énergie. L'élément d'absorption 27 s'étend en travers du cadre 22 d'un montant 28 à l'autre. Il est fixé à la traverse métallique 21 et/ou aux montants 28 par des moyens de fixation, tels que des moyens d'encliquetage sur les montants 28 et/ou un collage sur la traverse 21.

Avantageusement, la poutre pare-chocs inférieure 26 est avancée par rapport au reste du cadre 22 pour assurer une protection convenable au piéton. La poutre pare-chocs inférieure 26 possède une section en U ouverte horizontalement vers l'arrière. En option, la poutre pare-chocs inférieure 26 comprend des nervures intérieures de rigidification (non représentées).

Les montants 28 du bouclier 8 sont prévus pour faire office d'absorbeur d'énergie entre la peau 9 et les platines 20, et pour absorber l'énergie d'un choc sur le bouclier 8 à petite vitesse ou à moyenne vitesse (Danner).

Ainsi, les montants 28 sont aptes à être fixés directement en appui rigide contre les platines 20, sans interposer des absorbeurs de choc additionnels rapportés entre les montants 28 et les platines 20, ni entre les platines 20 et les longerons supérieurs 12 et inférieurs 16. Cette configuration diffère sensiblement de l'état de l'art actuel.

Pour un véhicule automobile dont la masse est comprise entre 900 Kg et 1400 Kg, l'énergie à dissiper en cas de choc moyenne vitesse (Danner) est traditionnellement comprise entre 8 KJ et 14 KJ, et plus généralement entre 8 KJ et 12 KJ. De préférence, chaque montant 28 est prévu pour absorber une énergie supérieure à 5 KJ en cas de choc moyenne vitesse (Danner), de préférence comprise entre 8 KJ et 12 KJ.

Chaque montant 28 présente une structure alvéolaire comprenant des alvéoles 32, 34 s'étendant longitudinalement entre une face arrière 36 et une face avant 38 des montants 28.

Chaque montant 28 comprend des alvéoles borgnes inversées comprenant des premières alvéoles 32 borgnes, fermées du côté de la face arrière 36 et ouvertes du côté de la face avant 38 (figures 1 à 3), et des deuxièmes alvéoles 34 borgnes ouvertes du côté de la face arrière 36 et fermées du côté de la face avant 28 (figure 4). Les premières alvéoles 32 et les deuxièmes alvéoles 34 sont disposées en quinconce (ou damier).

La traverse supérieure 24 s'étend au dessus de la traverse métallique 21. La traverse supérieure 24 comprend des moyens de fixation d'au moins un équipement auxiliaire du véhicule automobile. Selon le mode de réalisation représenté sur les figures, ces moyens de fixation sont prévus sur une branche 40 s'étendant à chacune des extrémités de la poutre supérieure 24. Les branches 40, venues de matière avec la poutre supérieure, s'étendent sensiblement perpendiculairement à la poutre supérieure 24 vers l'arrière du cadre 22. Les branches 40 s'étendent donc selon une direction sensiblement longitudinale vers l'arrière du bouclier 8.

Les branches 40 comprennent des moyens de fixation 42, représentés sur la figure 4, d'un équipement auxiliaire du véhicule automobile, tel qu'un radiateur 19. Les moyens de fixation sont par exemple formés par une encoche destinée à recevoir des moyens de fixation complémentaires 44 prévus sur le radiateur 19. Les moyens de fixation complémentaires 44 sont par exemple formés par des pions prévus sur le radiateur et s'emboîtant dans une encoche respective des branches 40. Selon un autre mode de réalisation, les moyens de fixation 42 sont formés par au moins un orifice (non représenté), sur chaque branche 40, de réception d'un pion complémentaire prévu sur le radiateur 19 ou d'un pion prévu pour s'engager dans un orifice complémentaire du radiateur 19. Sur les figures 1 à 3, on n'a pas représenté de moyens de fixation du radiateur 19 et ils peuvent être de tout type adapté à la réception de l'équipement auxiliaire du véhicule automobile.

Selon un mode de réalisation alternatif, le radiateur 19 est fixé aux branches 40 par l'intermédiaire d'au moins un élément de liaison (non représenté) agencé pour absorber les vibrations susceptibles de se propager entre le bouclier 8 et le radiateur 19. Cet élément de liaison est par exemple réalisé en un matériau élastomère présentant une certaine flexibilité tout en ayant une rigidité suffisante pour maintenir le radiateur 19 en position par rapport au bouclier 8. Un tel élément de liaison est plus particulièrement connu sous le nom de « silent box ». Un tel élément présente par exemple un orifice de réception d'un pion du radiateur 19 et un orifice de réception d'un pion prévu sur une branche 40 de la poutre supérieure 24 formant moyen de fixation 42. Selon un mode de réalisation, deux éléments de liaison sont prévus, chacun fixant respectivement le radiateur 19 à une des branches 40 de la poutre supérieure 24. Selon encore un autre mode de réalisation, la poutre supérieure 24 ne comprend pas de branche 40 et les éléments de liaison sont fixés aux parties extrêmes de la poutre supérieure 24.

Selon des modes de réalisation alternatifs, la poutre supérieure 24 comprend en outre des moyens de fixation d'autres équipements auxiliaires du véhicule automobile, tels que des moyens de fixation de supports d'optique ou des moyens de fixation à des longerons d'aile prévus sur la caisse du véhicule automobile. La poutre supérieure 24 peut également comprendre des moyens de réception de la serrure du capot du véhicule automobile.

La poutre supérieure 24 est agencée pour présenter une grande rigidité et une bonne résistance en flexion selon la direction verticale afin de résister au claquement ou à l'arrachement du capot du véhicule automobile. En outre, elle présente également des caractéristiques d'absorption d'énergie en cas de choc contre le véhicule automobile. A cet effet, la poutre supérieure 24 comprend des nervures 46 s'étendant au moins sur la face avant de ladite poutre 24, comme représenté sur les figures 1 à 3. Selon un mode de réalisation non représenté, les nervures 46 s'étendent en outre sur la face supérieure de la poutre 24 jusque sur les branches 40. Comme représenté sur les figures 1 à 3, les nervures 46 sont par exemple réparties entre des nervures verticales 48 espacées les unes des autres longitudinalement et des nervures 50 en « X » s'étendant en diagonale entre les nervures verticales 50. Les nervures prévues sur la face supérieure de la poutre supérieure 24 s'étendent par exemple en « dents de scie ». Des géométries alternatives peuvent être utilisées pour conférer les caractéristiques souhaitées à la pièce.

Selon le mode de réalisation représenté sur les figures 1 à 3, la poutre supérieure 24 comprend en outre des alvéoles 52 prolongeant les montants 28 sur les côtés de la face avant de la poutre supérieure 24.

Le radiateur 19 représenté sur la figure 4 est également fixé à la poutre inférieure 26, par des moyens de fixation tels que les éléments de liaison 54, ou « silentbloc », décrits ci-dessus. Selon un mode de réalisation alternatif non représenté, la poutre inférieure 26 comprend des montants portant des moyens de fixation apte à recevoir des moyens de fixation complémentaires prévus sur le radiateur 19.

Chaque montant 28 est fixé directement sur la platine 20 correspondante, en contact et en appui longitudinal rigide contre sur la platine 20. Chaque montant 28 recouvre la majeure partie de la surface d'appui offerte par la platine 20 correspondante.

Chaque montant 28 est fixé sur la platine 20 correspondante par vissage ou par collage. Cette deuxième solution est avantageuse, dans la mesure où elle permet une bonne répartition des efforts. En effet, les contraintes de design liées à l'assemblage par vissage (insert métalliques, trous, semelles de rigidification, espaces pour les visseuses) sont levées, tandis que les contraintes localisées et les risques d'arrachement causés par le vissage sont très fortement atténués. En outre, la géométrie choisie formée d'alvéoles borgnes inversées disposés en quinconces augmente considérablement la surface d'encollage à l'arrière des montants 28 et participe à la répartition favorable des efforts.

Les platines 20 de grande hauteur, ou platine géantes, raccordant chaque longeron supérieur 12 à un longeron inférieur 16, permet de répartir la distribution des efforts encaissés par le bouclier 8 sur une hauteur importante dans le véhicule, grâce aux montants 28 s'étendant entre les voies haute et basse.

Les platines 20 géantes offrent une surface d'appui rigide étendue aux montants 28, ce qui permet aux montants 28 de travailler uniformément en compression en cas de choc, sans flexion dans leur partie médiane située verticalement entre la vois haute 10 et la voie basse 14. Cet atout permet une conception homogène des montants 28, possédant des alvéoles analogues uniformément réparties, démoulables longitudinalement et destinées à travailler essentiellement en compression. L'architecture diffère donc radicalement des structures dépourvues de platines géantes, dont les montants doivent présenter un design destiné à un travail en flexion.

De ce fait, le véhicule muni d'un ensemble avant selon l'invention est moins intrusif lorsqu'il entre en contact avec un autre véhicule, ce qui bénéficie à la compatibilité intervéhiculaire à basse et moyenne vitesse.

La dimension de l'appui offert par les platines 20 est avantageusement comprise entre 100 et 180 mm en largeur, et entre 350 et 450mm en hauteur, ce qui correspond à des aires globalement comprises entre 3,5 et 8 dm².

La structure alvéolaire des montants 28 facilite la fabrication et confère aux montants une capacité d'absorption d'énergie suffisante sur une profondeur (dimension suivant la direction longitudinale) faible.

Le cadre 22 est obtenu d'un seul bloc par exemple par moulage par injection de matière plastique. Il peut être démoulé suivant une unique direction correspondant à la direction longitudinale du véhicule automobile lorsque le bouclier 8 est fixé sur le châssis 4. Ainsi, le cadre 22 peut être obtenu de façon simple, avec un coût de fabrication faible. La structure alvéolaire des montants 28 permet de concilier des angles de dépouille importants (compris entre 1° et 3° par exemple) et des épaisseurs constantes, ce qui est impossible avec une géométrie traditionnelle type « gaufre ». Cette astuce augmente l'efficacité de l'absorption (course réduite, tarage constant avec palier d'effort), permet de sauvegarder les longerons et limite le poids et le coût de fabrication du bouclier 8. Les pièces obtenues sont donc légères et présentent une économie de matière.

La structure alvéolaire des montants permet également de réduire les épaisseurs locales de parois délimitant les alvéoles 32, 34. Ainsi, cette épaisseur locale peut être réduite dans une gamme comprise entre 2,5 et 4 mm, avantageusement comprise entre 3 mm et 3,5 mm.

En outre, et d'une manière générale, le démoulage du bouclier monobloc 8 est facilité puisque les fortes dépouilles permet un démoulage par mouvement de deux demi-moules opposées dans des sens opposés le long d'un axe correspondant à l'axe longitudinal du véhicule. Ainsi, il n'est pas nécessaire de prévoir des tiroirs ou des parties mobiles dans le moule.

En outre, la constance des épaisseurs dans les montants 28 en damier permet d'obtenir une raideur uniforme lors d'un enfoncement longitudinal, par exemple lors d'un choc à moyenne vitesse. Ainsi, il est possible d'obtenir un palier d'effort sensiblement constant en fonction du déplacement, ce qui augmente l'énergie dissipée et diminue la course d'absorption, tout en restant sous la force de tarage des longerons 12, 16 définie plus haut.

Il en résulte que l'énergie d'un choc peut être dissipée moyennant une course réduite, et que la solution s'avère très compacte. Cette solution est donc particulièrement adaptée aux véhicules de faible cylindrée présentant une course longitudinale d'absorption de choc inférieure à 250 mm, et notamment inférieure à 200 mm. Les montants 28 présentent une épaisseur longitudinale comprise entre 120 et 220 mm. Ceci permet une absorption d'énergie efficace, tout en limitant le porte-à-faux du bouclier 8 pris entre les platines 20 et l'extrémité avant du bouclier 8.

Par ailleurs, en choc piéton décalé latéralement, pour des distances situées notamment à plus de 300 mm du centre des membrures 30, la réduction de la décélération se fait de préférence par compression pure, très localisée, des montants 28 en damier sur une course d'environ 50 mm.

La poutre supérieure 24 permet en outre d'intégrer de façon optimale le bouclier 8 avec les équipements auxiliaires l'entourant en portant des moyens de fixation de ces équipements, tout en conservant un procédé de réalisation particulièrement simple et économique.

## Revendications

1. Ensemble avant de véhicule automobile, du type comprenant au moins une paire de longerons supérieurs (12) et au moins une paire de longeron inférieure (16) avant d'un châssis (4) d'un véhicule automobile (2) et des platines (20) d'appui et de fixation disposées aux extrémités avant des longerons (12, 16), les platines (20) étant reliés entre elles par une traverse métallique (21) s'étendant en regard des longerons supérieurs (12), **caractérisé en ce qu'**il comprend un bouclier (8) pare-chocs avant comprenant un cadre (22) monobloc en matière plastique formé d'une poutre supérieure (24) et d'une poutre pare-chocs inférieure (26) et de deux montants (28) reliant les poutres pare-chocs supérieure (24) et inférieure (26), les montants (28) du cadre (22) étant configurés pour faire office d'absorbeurs de chocs et fixés en appui directement contre les platines (20), la poutre supérieure (24) s'étendant au-dessus de la traverse métallique (21) et des platines (20).

2. Ensemble avant selon la revendication 1, **caractérisé en ce que** la poutre supérieure (24) comprend des moyens de fixation (42) d'au moins un équipement auxiliaire du véhicule automobile.

3. Ensemble avant selon la revendication 2, **caractérisé en ce que** la poutre supérieure (24) comprend au moins deux branches (40) s'étendant sensiblement perpendiculairement au cadre (22) vers l'arrière de celui-ci, lesdites branches (40) comprenant des moyens de fixation (42) d'un équipement auxiliaire du véhicule automobile.

4. Ensemble avant selon l'une quelconque des revendications 1 à 3, **caractérisé en ce que** la poutre supérieure (24) présente des nervures (46, 48, 50) s'étendant au moins sur la face avant de ladite poutre (24).

5. Ensemble avant selon la revendication 4 lorsqu'elle dépend de la revendication 3, **caractérisé en ce que** la poutre supérieure (24) présente en outre des nervures sur sa face supérieure, lesdites nervures s'étendant en outre sur les branches (40).

6. Ensemble avant selon l'une quelconque des revendications 1 à 5, **caractérisé en ce que** la poutre inférieure (26) comprend des moyens de fixation d'au moins un équipement auxiliaire du véhicule automobile.

7. Ensemble avant selon l'une quelconque des revendication 1 à 6, **caractérisé en ce qu'**il comprend un élément d'absorption d'énergie (27), ledit élément (27) étant disposé contre la traverse métallique (21) et s'étendant sensiblement en travers du cadre (22).

8. Ensemble avant selon l'une quelconque des revendications 1 à 7, **caractérisé en ce que** les montants (28) présentent une structure alvéolaire formée d'alvéoles s'étendant longitudinalement au travers des montants (28) et débouchant sur la face arrière et/ou avant du bouclier (8).

9. Ensemble avant selon la revendication 8, **caractérisé en ce que** chaque montant (28) comprend des premières alvéoles (32) borgnes, fermées du côté de la face arrière (36) et ouvertes du côté de la face avant (38), et des deuxième alvéoles (34) borgnes ouvertes du côté de la face arrière (36) et fermée du côté de la face avant (28).

10. Ensemble avant selon l'une quelconque des revendications 1 à 9, **caractérisé en ce qu'**il comprend en outre un équipement auxiliaire (19) s'étendant en regard de la face arrière du bouclier (8), ledit équipement étant fixé au moins à la poutre supérieure (24) dudit bouclier (8) par les moyens de fixation (42) de ladite poutre additionnelle (24).

11. Ensemble avant selon la revendication 10, **caractérisé en ce que** l'équipement auxiliaire (19) est fixé à la poutre supérieure (24) par au moins un élément de liaison fixé aux moyens de fixation de la poutre supérieure (24), ledit élément de liaison étant agencé pour absorber les vibrations entre l'équipement auxiliaire (19) et le bouclier (8).

## Claims

1. Front section of a motor vehicle of the type comprising at least one pair of upper front bars (12) and at least one pair of lower front bars (16) of a body (4) of a motor vehicle (2) and support and fastening panels (20) arranged at the front ends of the bars (12, 16), wherein the panels (20) are connected to one another by a metal cross member (21) that extends facing the upper bars (12), **characterised in that** it comprises a deformable front bumper bar (8) comprising a frame (22) made in a single piece of plastic material formed from an upper beam (24) and a lower bumper bar beam (26) and two struts (28) connecting the upper (24) and lower (26) bumper bar beams, wherein the struts (28) of the frame (22) are configured to act as shock absorbers and are fixed to rest directly against the panels (20), wherein the upper beam (24) extends above the metal cross member (21) of the panels (20).

2. Front section according to claim 1, **characterised in that** the upper beam (24) comprises fastening means (42) for at least one auxiliary fitting of the motor vehicle.

3. Front section according to claim 2, **characterised in that** the upper beam (24) comprises at least two branches (40) extending substantially perpendicularly to the fame (22) towards the rear thereof, wherein said branches (40) comprise fastening means (42) for an auxiliary fitting of the motor vehicle.

4. Front section according to any one of claims 1 to 3, **characterised in that** the upper beam (24) has ribs (46, 48, 50) extending at least over the front face of said beam (24).

5. Front section according to claim 4 when dependent on claim 3, **characterised in that** the upper beam (24) additionally has ribs on its upper face, wherein said ribs additionally extend over the branches (40).

6. Front section according to any one of claims 1 to 5, **characterised in that** the lower beam (26) comprises fastening means for at least one auxiliary fitting of the motor vehicle.

7. Front section according to any one of claims 1 to 6, **characterised in that** it comprises a force absorption element (27), wherein said element (27) is mounted against the metal cross member (21) and extends substantially across the frame (22).

8. Front section according to any one of claims 1 to 7, **characterised in that** the struts (28) have a meshed structure formed from cells extending longitudinally through the struts (28) and opening onto the rear and/or front face of the bumper bar (8).

9. Front section according to claim 8, **characterised in that** each strut (28) comprises first blind cells (32) closed to the rear face (36) side and open to the front face (38) side, and second blind cells (34) open to the rear face (36) side and closed to the front face (28) side.

10. Front section according to any one of claims 1 to 9, **characterised in that** it additionally comprises an auxiliary fitting (19) that extends facing the rear face of the bumper bar (8), wherein said fitting is fixed to at least the upper beam (24) of said bumper bar (8) by the fastening means (42) of said additional beam (24).

11. Front section according to claim 10, **characterised in that** the auxiliary fitting (19) is fastened to the upper beam (24) by at least one connecting element fastened to the fastening means of the upper beam (24), wherein said connecting element is arranged to absorb vibrations between the auxiliary fitting (19) and the bumper bar (8).

## Patentansprüche

1. Fronteinheit für ein Kraftfahrzeug, von dem Typ der mindestens ein Paar von vorderen oberen Längsträgern (12) und mindestens ein Paar von vorderen unteren Längsträgern (16) eines Fahrgestells (4) eines Kraftfahrzeugs (2) sowie an den vorderen Enden der Längsträger (12, 16) angeordnete Abstütz- und Befestigungsplatten (20) aufweist, wobei diese Platten (20) durch einen metallischen Querträger (21), der sich den oberen Längsträgern (12) gegenüberliegend erstreckt, miteinander verbunden sind,
**dadurch gekennzeichnet,**
**dass** sie einen vorderen Stoßfängerschild (8) mit einem einstückigen Rahmen (22) aus Kunststoffmaterial aufweist, der aus einer oberen Stoßfängerstrebe (24) und einer unteren Stoßfängerstrebe (26) sowie zwei Vertikalträgern (28) gebildet ist, welche die obere Stoßfängerstrebe (24) und untere Stoßfängerstrebe (26) verbinden, wobei die Vertikalträger (28) des Rahmens (22) so konfiguriert sind, dass sie als Stoßfänger fungieren und unmittelbar gegen die Platten (20) anliegend befestigt sind, und wobei sich die obere Strebe (24) über dem metallischen Querträger (21) und den Platten (20) erstreckt.

2. Fronteinheit nach Anspruch 1,
**dadurch gekennzeichnet,**
**dass** die obere Strebe (24) Einrichtungen (42) zum Befestigen von mindestens einer Zusatzausrüstung des Kraftfahrzeugs aufweist.

3. Fronteinheit nach Anspruch 2,
**dadurch gekennzeichnet,**
**dass** die obere Strebe (24) mindestens zwei Bereiche (40) aufweist, die sich im wesentlichen senkrecht zum Rahmen (22) zu dessen Rückseite hin erstrecken, wobei die Bereiche (40) Einrichtungen (42) zum Befestigen einer Zusatzausrüstung des Kraftfahrzeugs aufweisen.

4. Fronteinheit nach einem der Ansprüche 1 bis 3,
**dadurch gekennzeichnet,**
**dass** die obere Strebe (24) Rippen (46, 48, 50) aufweist, die sich zumindest auf der Vorderfläche der Strebe (24) erstrecken.

5. Fronteinheit nach Anspruch 4, sofern er von Anspruch 3 abhängig ist,
**dadurch gekennzeichnet,**
**dass** die obere Strebe (24) ferner auf ihrer Oberseite Rippen aufweist, die sich desweiteren auf den Bereichen (40) erstrecken.

6. Fronteinheit nach einem der Ansprüche 1 bis 5,
**dadurch gekennzeichnet,**
**dass** die untere Strebe (26) Einrichtungen zum Befestigen von mindestens einer Zusatzausrüstung des Kraftfahrzeugs aufweist.

7. Fronteinheit nach einem der Ansprüche 1 bis 6,
**dadurch gekennzeichnet,**
**dass** sie ein Element (27) zum Absorbieren von Energie aufweist, wobei dieses Element (27) gegen den metallischen Querträger (21) anliegend angeordnet ist und sich im wesentlichen quer zum Rahmen (22) erstreckt.

8. Fronteinheit nach einem der Ansprüche 1 bis 7,
**dadurch gekennzeichnet,**
**dass** die Vertikalträger (28) eine Wabenstruktur aufweisen, die aus Waben gebildet ist, welche sich in Längsrichtung über die Vertikalträger (28) erstrecken und an der Rückfläche und/oder Vorderfläche des Schildes (8) münden.

9. Fronteinheit nach Anspruch 8,
**dadurch gekennzeichnet,**
**dass** jeder Vertikalträger (28) erste Blindwaben (32), die auf der Seite der Rückfläche (36) geschlossen und auf der Seite der Vorderfläche (38) offen sind, sowie zweite Blindwaben (34) aufweist, die auf der Seite der Rückfläche (36) offen und auf der Seite der Vorderfläche (28) geschlossen sind.

10. Fronteinheit nach einem der Ansprüche 1 bis 9,
**dadurch gekennzeichnet,**
**dass** sie ferner eine Zusatzausrüstung (19) aufweist, die sich der Rückfläche des Schildes (8) gegenüberliegend erstreckt, wobei diese Ausrüstung mittels der Befestigungseinrichtungen (42) der zusätzlichen Strebe (24) zumindest an der oberen Strebe (24) des Schildes (8) befestigt ist.

11. Fronteinheit nach Anspruch 10,
**dadurch gekennzeichnet,**
**dass** die Zusatzausrüstung (19) mit mindestens einem an den Befestigungseinrichtungen der oberen Strebe (24) befestigten Verbindungselement an der oberen Strebe (24) befestigt ist, wobei das Verbindungselement dazu ausgelegt ist, Schwingungen zwischen der Zusatzausrüstung (19) und dem Schild (8) zu absorbieren.
